# EUROPEAN PATENT APPLICATION

(11) **EP 4 024 754 A1**
(43) Date of publication of application: **06.07.2022**
(21) Application number: 20217735.8
(22) Date of filing: 30.12.2020
(51) Int. Cl.: H04L 9/08

(54) **COMMUNICATION SYSTEM INCLUDING DEVICES WITH SDR CHIP**

(71) Applicant: Nagravision Sàrl, 1033 Cheseaux-sur-Lausanne (CH)
(72) Inventor: PERRINE, Jérôme, 1033 Cheseaux-sur-Lausanne (CH); CONUS, Joël, 1033 Cheseaux-sur-Lausanne (CH)
(74) Representative: Poindron, Cyrille

(57) **Abstract**

The communication system comprises at least two communication devices (1, 2), that each include a software-defined radio chip (10, 20). Each software-defined radio chip (10, 20) includes a key generator (120, 220) configured to generate a secret key (kₛ) using a physical unclonable function, or PUF, (121, 221) that takes as an input configuration data (CoD₁, CoD₂). The secret key (kₛ) is shared by the software-defined radio chips (10, 20) of the at least two communication devices (1, 2). The configuration data (CoD₁, CoD₂) is unique per software-defined radio chip and depends on physical random factors introduced during manufacture of the software-defined radio chip (10, 20). It is adapted for the key generator (120, 220) to generate the shared secret key.

## Description

### TECHNICAL FIELD

The present disclosure relates to the field of secure radio communication, more precisely to the field of radio communication between two or more communication devices having software-defined radio.

### BACKGROUND

Software-defined radio (SDR) is a radio communication system that uses software running on a basic hardware platform to perform many functions that have been traditionally implemented in hardware components (e.g. mixers, filters, amplifiers, modulators/demodulators, detectors, etc.). The SDR technology has been used increasingly in recent years due to advances in performances of digital electronics and processing, and lower costs. Software-defined radios are now used in many applications and in many areas.

Typically, a software-defined radio chip, or SDR chip, has a radio front end part connected to a radio antenna, operating as an interface between the analogue domain and the digital domain, and a digital back end part for processing digital signals or data. The radio front end can comprise an A/D converter (analog to digital) and a D/A converter (digital to analog).

The basic concept of SDR is that the radio can be totally configured by means of software implemented on a hardware platform. Different hardware platforms can be used, like FPGAs (Field Programmable Gate Arrays), DSPs (Digital Signal Processors) and/or ASICs (Application-Specific Integrated Circuits). The software can be stored into the SDR chip during manufacture or downloaded later for example from a server through a communication network. The software can also be modified, updated and/or upgraded during the lifetime of the SDR chip.

A major advantage of SDR is that the radio can be easily reconfigured for a new application, or to apply changes to standards, or to meet the requirements or preferences of a user. The performances of the software defined radio can be changed by simply updating the software.

Software defined radio is very useful in areas such as mobile or wireless communications. By simply updating the software, it becomes possible to easily apply changes to standards defining protocols for radio communications. Updating the software can even be done remotely through a communication network. It does not require any change of the hardware.

However, the ability to reconfigure the radio through software gives rise to security concerns. For example, a security breach could allow a malicious third party to modify the software, causing a malicious radio reconfiguration and consequently a radio malfunction and interferences in the RF radio-frequency or RF spectrum. The SDR device needs to be protected against such malicious attacks.

There is a need to improve the security in radio communications between SDR devices.

### SUMMARY

The present disclosure concerns a communication system comprising at least two communication devices, that each include a software-defined radio chip, characterized in that
each software-defined radio chip includes a key generator configured to generate a secret key using a physical unclonable function, PUF, that takes as an input configuration data,
wherein
the secret key is a key shared by the software-defined radio chips of the at least two communication devices, and
the configuration data is unique per software-defined radio chip, dependent on physical random factors introduced during the manufacture of said software-defined radio chip, and is adapted for the key generator of said software-defined radio chip to generate the shared secret key.

The physical unclonable function or PUF provides an output that can be the secret key or a seed for deriving said secret key.

Advantageously, each software-defined radio chip is configured to use the shared secret key as a protection parameter to protect a communication between the at least two communication devices.

In each software-defined radio chip, the PUF provides the secret key or a seed for deriving the secret key. This secret key is common to the at least two communication devices and can be used to protect the communication between the two communication devices, for example by encrypting data communicated with the shared secret key or a parameter of the radio transmission between the two communication devices.

The PUF provides an additional layer of security, for example against cloning, that can improve the security on the radio signals.

The PUF and the secret key generated by the PUF can be used at different levels in order to improve the security of the radio signals: radio frequency level, waveform level, data level and protocol level.

The at least two communication devices can be configured to receive a frequency hopping sequence encrypted with the shared secret key from a central server, and use FHSS transmissions to communicate with each other, changes of a carrier frequency being controlled by said frequency hopping sequence.

Alternatively, the at least two communication devices can be configured to transmit from one to another a frequency hopping sequence encrypted with the shared secret key, and use FHSS transmissions to communicate with each other, changes of a carrier frequency being controlled by said frequency hopping sequence.

The two software-defined radio chips can be configured to communicate data with each other based on modulation of a waveform, as a carrier signal, and use the shared secret key as a parameter to set the modulation.

The two software-defined radio chips can be configured to use the shared secret key as an encryption key to encrypt and/or decrypt data transmitted between the two devices.

Advantageously, the physical unclonable function is implemented within each software-defined radio chip using a programmable hardware circuit.

In some embodiments, the communication system comprises a distribution server storing the configuration data of the software-defined radio chips of the two or more communication devices and configured to transmit each configuration data to the corresponding software-defined radio chips through a communication network.

The communication system can also comprise a secure memory (or a secure database) storing characterization data of each software-defined radio chip and including a configuration data generator configured to generate the configuration data for each software-defined radio chip from the stored characterization data of said software-defined radio chip. The configuration data for each SDR chip is generated from the characterization data of said SDR chip, so that the key generator of said SDR chip generates the shared secret key.

The secure memory can store right data of each software-defined radio chip indicating the rights of said software-defined radio chip to communicate with one or more other software-defined radio chips.

The communication system can comprise a plurality of groups of communication devices each provided with a software-defined radio chip including a key generator, the communication devices of each group sharing a secret key that is generated by the key generator of each of the communication devices of said group and is unique per group.

The present disclosure also concerns a software-defined radio chip for a communication device suitable to be included in the communication system previously defined, characterized in that it comprises:
a key generator configured to generate a predetermined secret key using a physical unclonable function, PUF, that takes as an input configuration data, and
a memory storing said configuration data, that is unique per software-defined radio chip, dependent on physical random factors introduced during the manufacture of the software-defined radio chip, and is adapted for the key generator to generate said predetermined secret key.

Advantageously, the software-defined radio chip comprises at least one functional module that uses the secret key as a protection parameter to protect a communication with between the communication device and the at least one other communication device.

The software-defined radio chip can be configured to decrypt a frequency hopping sequence, received in encrypted form, with the secret key, and include a FHSS module to communicate using FHSS transmissions, changes of a carrier frequency being controlled by a frequency hopping sequence.

The software-defined radio chip can be configured to communicate with the software-defined radio chip of the at least one other device using modulation of a waveform, as a carrier signal, and to use the secret key as a parameter to set the modulation.

The software-defined radio chip can include an encryption or decryption module that it is configured to encrypt and decrypt data transmitted between the communication device and the at least one other communication device using the secret key as an encryption key.

The physical unclonable function can be implemented using a programmable hardware circuit.

The present disclosure also concerns a communication device including the software-defined radio chip as above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a simplified schematic diagram of a SDR chip.
Figure 2 shows a communication system according to a particular embodiment.
Figure 3 shows a communication system according to another particular embodiment.

### DETAILED DESCRIPTION

The present disclosure concerns a radio communication system 100 including a plurality of SDR (Software-Defined Radio) communication devices that can communicate with each other wirelessly, by radio. The communication devices can communicate through a communication network 3 or through a direct radio link. The communication devices can be smartphones, mobile phones, tablets, computers, laptops, or any other equipment, apparatus, machine or device that can communicate by radio.

### First embodiment

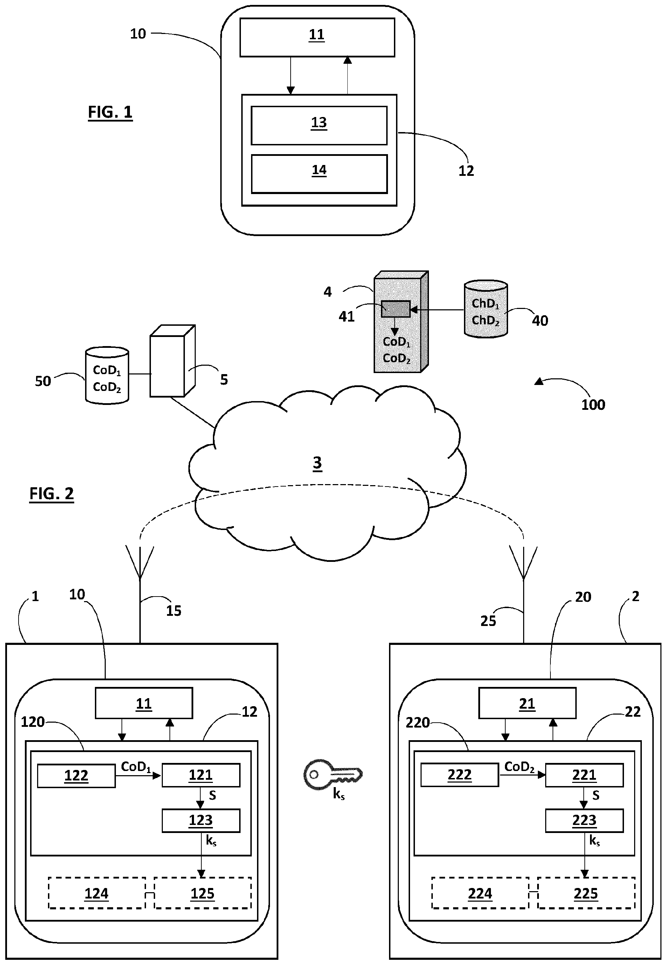

A first embodiment of the system 100 will now be described with reference to figure 2. In figure 2, only two devices 1, 2 are represented as an illustrative example. However, the system 100 can include more than two communication devices.

In the first embodiment, each of the SDR devices 1, 2 is both transmitter and receiver. In another embodiment, one of the SDR devices 1,2 could be a transmitter and the other one a receiver.

Each SDR communication device 1, 2 includes a software-defined radio chip (or module) 10, 20.

Figure 1 is a schematic and simplified diagram of the software-defined radio chip 10 of the device 1. The software-defined radio chip 20 hosted by the device 2 is similar. Schematically, the software-defined radio chip 10 includes two parts: a radio front end part 11, 21 and a digital back end part 12, 22.

The radio front end part 11, 21 is an interface between the analogue domain and the digital domain. It is connected to a radio antenna 15, 25 of the hosting communication device 1, 2. The radio front end part 11, 21 can comprise a radio frequency transceiver (RFT) including conversion units such as an analogue to digital converter (ADC) and a digital to analogue converter (DAC). The structure of the radio front end part 11, 21 is well known by the person skilled in the art and will not be described in more detail in the present description.

In each software-defined radio chip 10, 20, the digital back end part 12, 22 is for processing digital signals or data. Schematically, the digital back end part 12 comprises software 13 and a hardware platform 14 on which the software 13 runs. Many functional modules of the radio system are implemented in the software 13 executing on the hardware platform 14. The present description will only describe the functional modules related to the present invention.

The hardware platform 14 can comprise a digital signal processor, such as a general-purpose processor, and/or programmable hardware circuits or cells, such as FPGAs (Field-Programmable Gate Array), that can be programmed to carry out desired application or functionality requirements.

Figure 2 shows the distributed system 100 including the communication devices 1, 2 communicating with each other wirelessly, here through the communication network 3. In figure 2, a functional block diagram of the digital back end part 12, 22 of each device 1, 2 is represented. It includes different functional modules (described below) that are software modules running on the hardware platform of the device 1, 2.

As shown in figure 2, the digital back end part 12, 22 includes a key generator 120, 220. The role of this functional module is to generate at least one secret key kₛ. This secret key kₛ is shared by the software-defined radio chips 10, 20 hosted by the two (or more) devices 1, 2 that communicate with each other. It is a secret key generated and predetermined by a key management system that will be described later in the description. In other words, the secret key kₛ is common to the two (or more) communicating devices 1 and 2. The key generation is based on a physical unclonable function, or PUF. More precisely, in operation, each key generator 120, 220 uses a physical unclonable function 121, 221, or PUF, that takes as an input specific configuration data CoD₁, CoD₂ and provides an output used as a seed S for deriving the secret key kₛ shared by the SDR chips 10, 20. The configuration data CoD₁, CoD₂ is unique per chip 10, 20. It is referenced as CoD₁ for the SDR chip 10 and CoD₂ for the SDR chip 20. The configuration data CoD₁, CoD₂ depends on physical random factors introduced during the manufacture (production) of the software-defined radio chip 10, 20 and is adapted for the key generator 120, 220 to generate the predetermined secret key kₛ using its own PUF 121, 221. The configuration data CoD₁, CoD₂ is stored in a memory 122, 222 of the SDR chip 12, 22.

Each physical unclonable function (or PUF) 121, 221 is installed within the software-defined radio chip 10, 20 of the corresponding device 1, 2. The installation of the PUF 121, 221 can use programmable hardware cells or circuits, such as FPGA (Field Programmable Gate Array). The PUF 121, 221 implemented in the software-defined radio chip 10, 20 depends on the uniqueness of the physical microstructure of this software-defined radio chip 10, 20, that depends on random physical factors introduced during manufacture (production). When configuration data CoD₁, CoD₂ is provided as an input, the PUF 121, 221 generates an output value S, in a predictable and repeatable way resulting from the complex interaction of the input (i.e., the configuration data CoD₁, CoD₂) with the physical microstructure of the SDR chip 10, 20. In other words, each PUF 121, 221 generates a predefined seed S from the configuration data CoD₁, CoD₂. The value of the seed is repeatable: when the same data is provided both times as an input to a given PUF 121 (or 221), this specific PUF 121 (or 221) generates the same output value the both times. The configuration data CoD (here CoD₁, CoD₂) can be seen as « correction data », specifically designed for a given PUF, that will make the PUF output a known value (the seed S) in a repeatable manner. This « correction data » is different for each SDR chip because all PUFs are different by definition, but all SDR chips produce the same output.

The secret key kₛ can be directly the output of the PUF 121, 221 or be derived from the output (seed S) of the PUF 121, 221 for example using a key derivator 123, 223. The key derivator 123, 223 is another functional module of the SDR chip 10, 20 for implementing a key derivation function or a key ladder (or any other cryptographic function or construction that can produce one or more keys). The use of a key derivator that derives the secret key kₛ from the output of the PUF has the advantage that multiple different keys can be generated from a single seed (output from the PUF). This is useful when several keys are needed in the system.

The configuration data CoD₁, CoD₂ of each communication device 1, 2 is adapted so that the corresponding key generator 120, 220 produces the shared secret key kₛ (directly output from the PUF or produced by the key derivator) that is determined in advance to be common to the communication devices 1, 2 communicating together.

In the present embodiment, the configuration data CoD₁, CoD₂ is a series of bits 0 and 1. It is generated from characterization data ChD₁, ChD₂ of the software-defined radio chip 10, 20, that is unique per chip. The configuration data CoD₁, CoD₂ for each SDR chip 10, 20 is generated from the characterization data ChD₁, ChD₂ of this SDR chip 10, 20 and adapted so that the secret key kₛ, common to both devices 1, 2, is derived from the output of the PUF 121, 221 to which this configuration data CoD₁, CoD₂ is provided as an input.

The characterization data ChD₁, ChD₂ of the software-defined radio chip 10, 20 is obtained during a characterization process of the chip 10, 20, typically during manufacture. The characterization data ChD₁, ChD₂ is unique per chip. It is referenced as ChD₁ for SDR chip 10 and ChD₂ for the SDR chip 20. It characterizes unique characteristics of the software-defined radio chip 10, 20 due to random physical factors introduced during manufacture. The characterization data ChD₁, ChD₂ is sensitive and needs to be stored in a secure memory 40. For example, the secure memory 40 is hosted by a secure server 4 or a secure network. The characterization data ChD₁, ChD₂ can be stored in association with identification data of the corresponding device 1, 2 or software-defined radio chip 10, 20. The characterization data of a software-defined radio chip can also be associated with right data indicating right(s) to communicate with one (or more) other software-defined radio chip or hosting communication device, in the memory 40.

The secure server (or network) 4 can also include a configuration data generator 41 that generates the configuration data CoD₁, CoD₂ specifically dedicated to a given communication device 1, 2 or software-defined radio chip 10, 20 from the characterization data ChD₁, ChD₂ of this SDR chip 10, 20.

The configuration data CoD₁, CoD₂ of the different devices 1, 2 can be stored in a memory or database 50 of a distribution server 5. The configuration data CoD₁, CoD₂ can be stored in association with identification data of the corresponding device 1, 2 or software-defined radio chip 10, 20.

The secure server (or network) 4 and the distribution server 5 are part of the key management system.

For security reasons, the characterization data ChD₁, ChD₂ (and the right data) of the different software-defined radio chips 10, 20 can be kept offline. In that case, the secure server (or secure network) 4 is not connected to the communication network 3, as shown in figure 2. In that way, the configuration data of the SDR chips 10, 20 can be computed in the most secure manner. A drawback of such a configuration is that new configuration data cannot be computed in real-time and therefore the rights of a SDR chip cannot be changed live. For example, a device cannot be revoked (or can hardly be revoked).

Alternatively, the secure server (or secure network) 4 can be connected to the communication network 3. In that case, both servers 4 and 5 could be merged into one server. This configuration is less secure but has the advantage that new configuration data can be generated on-the-fly, typically when the rights of a communication device hosting a SDR chip change. In that case, when a new communication device is added or when a communication device is revoked, the memory or database 50 can be easily updated.

In some embodiments, the configuration data CoD₁, CoD₂ is recorded in the software-defined radio chip 10, 20 during chip manufacturing. In other embodiments, the configuration data CoD₁, CoD₂ is downloaded from the distribution server 5 into the corresponding software-defined radio chip 10, 20 of the device 1, 2 through the communication network 3, during or after manufacturing. In each software-defined radio chip 10, 20, the configuration data CoD₁, CoD₂ is stored in an internal memory 122, 222.

The configuration data CoD₁, CoD₂ is not sensitive data. For example, if the configuration data CoD₁ of the SDR chip 10 of the communication device 1 is obtained by another chip and provided as input to a physical unclonable function of this other chip, it will produce an output value different from the seed S from which the common secret key kₛ is derived. Therefore, it is not necessary to protect the configuration data CoD in confidentiality, for example when the configuration data CoD₁, CoD₂ is transmitted from the distribution server 5 to the SDR chip 10, 20. However, it may be useful to protect the configuration data CoD₁, CoD₂ in integrity and/or authenticity in order to avoid that a third party maliciously replaces the configuration data CoD₁, CoD₂ by other data in order to prevent the two devices from communicating.

The shared secret key kₛ can be used by the communication devices 1, 2 as a protection parameter to protect communication between each other. The shared secret key kₛ can be used so that the communication language between the software-defined radio chips 10, 20 of the communication devices 1, 2 is unique and the chips 10, 20 are the only ones able to understand each other. It can be used in any cryptographic algorithm or by any cryptographic module of the software-defined radio chip 10, 20 in order to protect at least part of the communication between the communication devices 1, 2. It can be used at different levels, for example:
- at a radio frequency level,
- at a waveform level,
- at a data level, and/or
- at a protocol level.

The following embodiments illustrate different use cases of the shared secret key kₛ as a protection parameter in a communication between the communication devices 1, 2.

### Second embodiment

A second embodiment is based on the first embodiment. In this second embodiment, the shared secret key kₛ is used at the radio frequency level. The two (or more) devices 1, 2 are configured to communicate with each other using FHSS (Frequency Hopping Spread Spectrum) transmissions.

In this second embodiment, each software-defined radio chip 10, 20 has a software FHSS module 124, 224 for executing a FHSS method of transmitting and receiving radio signals by rapidly changing the carrier frequency among a plurality of distinct frequencies occupying a given spectral band. This technique of communication can make communication eavesdropping much harder. The changes are controlled by a code, commonly termed as a frequency hopping sequence. This frequency hopping sequence is known to all devices 1, 2 (i.e., to both chips 10, 20) communicating with each other. Before the FHSS transmission, the frequency hopping sequence needs to be shared by the two software-defined radio chips 10, 20.

For example, the communication devices 1, 2 transmit the frequency hopping sequence encrypted with the shared secret key from one to another. Indeed, the frequency hopping sequence needs to be protected at least in confidentiality for its transmission between the devices 1, 2. Therefore, the frequency hopping sequence is encrypted by the transmitter device (for example the device 1), and decrypted by the receiver device (device 2).

Alternatively, the communication devices can receive the frequency hopping sequence encrypted with the shared secret key from a central server. In that case, the frequency hopping sequence is encrypted centrally by the server, for example the server 5, and then distributed to all devices that need to communicate with each other. The software-defined radio chips of the communication devices are configured to receive the common frequency hopping sequence in encrypted form from the central server, decrypt said frequency hopping sequence using the shared secret key kₛ and use FHSS transmissions to communicate with each other. Changes of a carrier frequency is controlled by the shared frequency hopping sequence.

The encryption/decryption of the frequency hopping sequence can be performed by a software or hardware module of encryption and decryption 125, 225. It uses the common secret key kₛ output from the PUF 121, 221 or derived from the output of the PUF 121, 221 to encrypt and decrypt the frequency hopping sequence.

### Third embodiment

A third embodiment is based on the first embodiment. In this third embodiment, the shared secret key kₛ is used at a waveform level. The communication devices 1, 2 are configured to communicate data with each other based on modulation of a waveform used as a carrier signal.

In the third embodiment, the software-defined radio chip 10, 20 of each device uses the shared secret key kₛ as a parameter to set the modulation. A non-exhaustive and illustrative list of parameters of modulation that can be set using the shared secret key kₛ is given below:
- bandwidth of modulation;
- type of modulation (analog or digital);
- technique of modulation (amplitude, phase, ...);
- modulation alphabet in digital modulation;
- symbol rate in digital modulation;
- digital encoding technique: NRZ, Manchester, etc...

### Fourth embodiment

A fourth embodiment is based on the first embodiment. In the fourth embodiment, the shared secret key kₛ is used at a data level. The communication devices 1, 2 communicate data with each other. In the fourth embodiment, this data transmitted from one device 1 (2) to the other device 2 (1) is encrypted using the shared secret key kₛ. In that case, the data is encrypted by a software or hardware encryption module of the SDR chip of the transmitter device (for example the device 1) using the key kₛ derived from the output from the PUF 121, and decrypted by a software or hardware decryption module of the SDR chip of the receiver device (for example the device 2) using the same key kₛ derived from the output of the PUF 221.

The key management system can be a distributed system, including for example the servers 4 and 5. However, other configurations of the key management system can be implemented. For example, the key management system can be implemented in one secure server (or in one secure local network).

As previously described, the key management system can have different modes of operation. In a first mode of operation, the key management system provides a remote service of key management to communication devices through a communication network. In that case, the communication devices can receive and/or update the information needed to communicate (i.e., the configuration data CoD) remotely from the key management system, through the communication network. In that case, the key management system is "offline", not connected to the communication network. The communication devices are pre-programmed with the information needed to communicate (i.e., the configuration data CoD) and can be operated fully offline.

The key management system can perform, at least part of the following functions:
- secure storage of the characterization data of each software-defined radio chip;
- storage of right data of each software-defined radio chip indicating the other software-defined radio chip(s) and/or hosting communication device(s) authorized to communicate with said software-defined radio chip;
- determination of a secret key shared by a plurality of software-defined radio chips authorized to communicate with each other (or a plurality of hosting communication devices authorized to communicate with each other);
- generation of the configuration data for each software-defined radio chip from the corresponding characterization data and depending on the secret key to generate;
- storage of the configuration data of each software-defined radio chip;
- distribution of the configuration data of each software-defined radio chip.

The communication system 100 can comprise more than two communication devices each having a software-defined radio chip and sharing the same secret key kₛ.

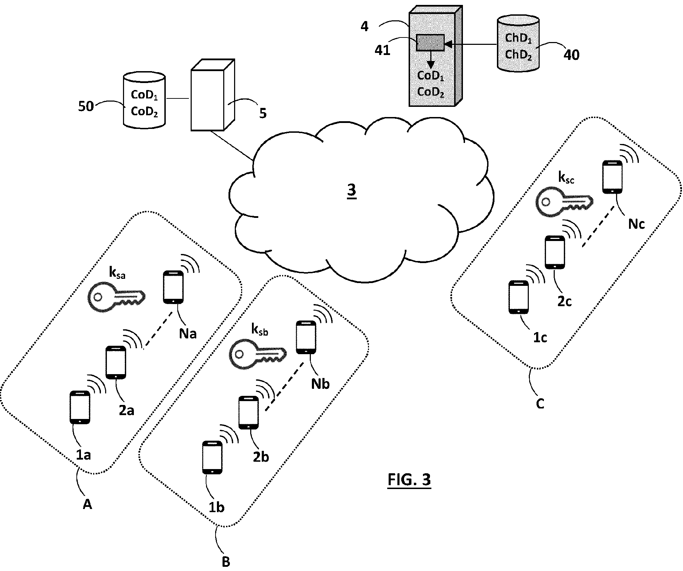

The system 100 could also comprise several groups of a plurality of communication devices. Each communication device has a software-defined radio chip including a key generator. The communication devices of each group share a common secret key that is unique per group and generated by the key generator of each of the communication devices of this group. Figure 3 illustrates an illustraive example of a system 100 including three groups A, B and C of communication devices (1a to Na in group A, 1b to Nb in group B, 1c to Nc in group C) that can communicate through the communication network 3. The communication devices of each group share the same secret key kₛₐ in group A, k_{sb} in group B, and k_{sc} in group C. The respective secret keys kₛₐ, k_{sb} and k_{sc} of the different groups are different. A communication device could belong to several groups.

As previously described, the characterization data of each software-defined radio chip is stored in a secure memory or database, within a secure server or a secure network that is either connected to the communication network or offline. In some embodiments, the configuration data of each software-defined radio chip can be stored in a distribution server that can download it to this software-defined radio chip, when appropriate. Alternatively, the configuration data are loaded offline in each communication device, for example at the end of the manufacturing.

The communication devices having a software-defined radio chip for communicating with each other could share two or more secret keys derived from the seed output from their respective physical unclonable function modules.

The secret key(s) shared by a plurality of software-defined radio chips communicating with each other can be used as protection parameter(s) to protect communication between the hosting communication devices in different mechanisms of protection and/or at different levels of protection. The different embodiments previously described could be implemented together by the communication devices.

## Claims

1. A communication system comprising at least two communication devices (1, 2), that each include a software-defined radio chip (10, 20), **characterized in that**
each software-defined radio chip (10, 20) includes a key generator (120, 220) configured to generate a secret key (kₛ) using a physical unclonable function, PUF, (121, 221) that takes as an input configuration data (CoD₁, CoD₂), wherein
the secret key (kₛ) is shared by the software-defined radio chips (10, 20) of the at least two communication devices (1, 2), and
the configuration data (CoD₁, CoD₂) is unique per software-defined radio chip, dependent on physical random factors introduced during manufacture of said software-defined radio chip (10, 20), and is adapted for the key generator (120, 220) of said software-defined radio chip (10, 20) to generate the shared secret key (kₛ).

2. The communication system according to claim 1, wherein each software-defined radio chip (10, 20) is configured to use the shared secret key (kₛ) as a protection parameter to protect a communication between the at least two communication devices (1, 2).

3. The communication system according to any of claims 1 and 2, wherein the at least two communication devices are configured to receive a frequency hopping sequence encrypted with the shared secret key from a central server, and use FHSS transmissions to communicate with each other, changes of a carrier frequency being controlled by said frequency hopping sequence.

4. The communication system according to any of claims 1 and 2, wherein the at least two communication devices are configured to transmit from one to another a frequency hopping sequence encrypted with the shared secret key, and use FHSS transmissions to communicate with each other, changes of a carrier frequency being controlled by said frequency hopping sequence.

5. The communication system according to any of claims 1 to 4, wherein the software-defined radio chips (10, 20) are configured to communicate data with each other based on modulation of a waveform, as a carrier signal, and use the shared secret key as a parameter to set the modulation.

6. The communication system according to any of claims 1 to 5, wherein the software-defined radio chips (10, 20) are configured to use the shared secret key as a key to encrypt and decrypt data transmitted between the at least two communication devices.

7. The communication system according to any of claims 1 to 6, further comprising a distribution server (5) storing the configuration data (CoD₁, CoD₂) of the software-defined radio chips (10, 20) of the at least two communication devices and configured to transmit each configuration data (CoD₁, CoD₂) to the corresponding software-defined radio chip (10, 20) through a communication network (3).

8. The communication system according to any of claims 1 to 7, further comprising a secure memory (40) storing characterization data (ChD₁, ChD₂) of each software-defined radio chip (10, 20) and a configuration data generator (41) configured to generate the configuration data (CoD₁, CoD₂) for each software-defined radio chip (10, 20) from the stored characterization data (ChD₁, ChD₂) of said software-defined radio chip (10, 20).

9. The communication system according to claim 8, wherein the secure memory (40) stores right data of each software-defined radio chip indicating the rights of said software-defined radio chip to communicate with one or more other software-defined radio chips.

10. The communication system according to any of claims 1 to 9, comprising a plurality of groups (A, B, C) of communication devices (1a, 2a, ..., 1b, 2b, ..., 1c, 2c,...) each provided with a software-defined radio chip including a key generator, the communication devices of each group sharing a secret key that is generated by the key generator of each of the communication devices of said group and is unique per group.

11. A software-defined radio chip for a communication device suitable to be included in the communication system according to any of claims 1 to 10, **characterized in that** it comprises:
a key generator (120) configured to generate a predetermined secret key (kₛ) using a physical unclonable function, PUF, that takes as an input configuration data (CoD₁), and
a memory (122) storing said configuration data (CoD₁), that is unique per software-defined radio chip (10, 20), dependent on physical random factors introduced during manufacture of the software-defined radio chip, and is adapted for the key generator (120) to generate said predetermined secret key (kₛ).

12. The software-defined radio chip according to claim 11, comprising at least one functional module (124, 125) that uses the secret key (kₛ) as a protection parameter to protect a communication between the communication device (1) and the at least one other communication device (2).

13. The software-defined radio chip according to any of claims 11 and 12, configured to decrypt a frequency hopping sequence, received in encrypted form, with the secret key (kₛ), and including a FHSS module (124) to communicate using FHSS transmissions, changes of a carrier frequency being controlled by a frequency hopping sequence.

14. The software-defined radio chip according to any of claims 11 to 13, configured to communicate with the software-defined radio chip (20) of the at least one other communication device (2) using modulation of a waveform, as a carrier signal, and to use the secret key as a parameter to set the modulation.

15. The software-defined radio chip according to any of claims 11 to 14, further including an encryption or decryption module (125) that it is configured to encrypt and decrypt data transmitted between the communication device (1) and the at least one other communication device (2) using the secret key as an encryption key.

16. The software-defined radio chip according to any of claims 11 to 15, wherein the physical unclonable function (121) is implemented using a programmable hardware circuit.

17. A communication device including the software-defined radio chip according to any of claims 11 to 16.
